# EUROPEAN PATENT APPLICATION

(11) **EP 2 683 200 A1**
(43) Date of publication of application: **08.01.2014**
(21) Application number: 12305800.0
(22) Date of filing: 03.07.2012
(51) Int. Cl.: H04W 40/32, H04W 72/02, H04W 84/18, H04W 84/20, H04W 74/08

(54) **Method for constructing a cluster tree topology in a personal area network**

(71) Applicant: Université de Strasbourg, 67081 Strasbourg Cedex (FR); Centre National de la Recherche Scientifique, 75794 Paris Cedex 16 (FR); Institut Polytechnique de Grenoble, 38031 Grenoble Cedex 1 (FR)
(72) Inventor: Theoleyre, Fabrice, 67400 Illkirch (FR)
(74) Representative: Littolff, Denis

(57) **Abstract**

A method for constructing a cluster-tree topology in an IEEE 802.15.4 standard ruled PAN (Personal Area Network) network including a PAN coordinator considered the root of the tree, and nodes all working in the synchronous beacon-enabled mode.

Nodes become associated in clusters, each cluster including a parent node and child nodes operating in a channel different from the channels of the neighbour clusters, this channel being chosen by the parent node for communicating with its children.

## Description

### FIELD OF THE INVENTION

The present invention pertains to Wireless Sensor Networks (WSN), and more particularly to a method for constructing a cluster tree topology in an IEEE 802.15.4 standard ruled Personal Area Network (PAN).

### BACKGROUND OF THE INVENTION

Such a WSN can enable a wide range of applications. However, to facilitate large scale deployments, the nodes building the network must cooperate to route data efficiently over long distances or through multihop configurations from source to destination. Considering these long distances, not every device can communicate directly with the destination, and cluster tree topologies are seen as a flexible and robust manner to provide multihop communications.

At the Medium Access Control (MAC) layer, however, a balance must be struck between achieving high quality or high efficiency radio resource allocation and energy expenditure. The IEEE 802,15.4 standard specifies the currently most significant MAC protocol commercially adopted for sensor networks. It provides two modes of operation, the asynchronous beaconless and synchronous beacon-enabled modes.

In order to save energy, which, as mentioned, is a constant issue, multihop communication requires the beacon-enabled mode if used with cluster-tree topology, which means that at least some nodes of the network working as coordinators must be able to send beacons periodically. In the past, several approaches have been proposed for constructing a multihop wireless sensor network by associating nodes with coordinators, starting from a PAN coordinator, which is considered the root of the network.

The construction of such a network for instance follows the scheme described hereinafter: when a node finds a coordinator, it may choose it as parent coordinator and start the association procedure. When the association is accepted by the parent coordinator, if the new associated node or child node is a Full-Function Device, capable of operating as coordinator, it becomes a coordinator itself and starts sending its own beacons to propagate the process: its neighbours may request association with the cluster-tree, and so on. If the child node is a Reduced-Function Device, it acts as an associated leaf, but it does not transmit beacons: it simply exchanges packets with a parent node.

In order to optimize network capacity and energy consumption, it has been further proposed that each coordinator periodically send beacons at the beginning of its superframe and piggyback the list of pending frames in its buffer. During the first part of the Contention Access Period (CAP) of the superframe as defined in IEEE 802.15.4, a child node either retrieves frames by transmitting a data request if it was present in the pending destinations list, or transmits its data frames to the coordinator. All nodes use a slotted Carrier Sense Multiple Access with Collision Avoidance (CSMA-CA) approach to access the medium. Note that in this case coordinators never initiate a transmission, but only reply to solicitations. Child nodes must explicitly request their frames, and they can thus safely switch off their radio and save energy. No deafness may appear.

A few Guaranteed Time Slots (GTS) may be reserved for periodic transmissions. Any child node may reserve a slot by transmitting a request during the Contention Access Period. If accepted, the slot is dedicated to the transmissions of the said node.

A beacon is transmitted every Beacon Interval (BI) while a superframe lasts for a Superframe Duration (SD). The Beacon Order (BO) and the Superframe Order (SO) values determine the BI and SD values.

Outgoing and incoming superframes to support multihop forwarding have also been proposed. A node must track its parent superframe, the incoming superframe, while maintaining its own superframe, the outgoing superframe. Outgoing and incoming superframes are separated by the interval of StartTime (duration between the received and transmitted beacons, respectively) minus the Superframe Duration (SD) during which both nodes may go to sleep safely. However, if two coordinators with the same parent have the same StartTime value, they transmit their superframes simultaneously, creating a collision.

To resolve this problem, a Beacon-Only Period (BOP) has for instance been introduced at the beginning of each superframe.

A BOP is divided into several slots: a coordinator chooses one of these slots to transmit its beacons. If it detects a collision, it need only change its BOP slot. Only coordinators are authorized to transmit a beacon during the BOP, the Contention Access Period starting just after the BOP.

The choice of the number of BOP slots is important. If it is too small, beacons may continue colliding, whereas if it is too large, many BOP slots will be unused.

BOP only solves the problem of beacon collisions, and data frames may continue colliding during the Contention Access Period. Thus, this solution is only suitable for very low traffic scenarios and a low network density.

Alternate solutions have also been proposed aiming to schedule superframes so that collisions are not possible. The idea is that two interfering nodes should use non-overlapping superframes.

In one existing solution, each coordinator reports its position to a central controller, which checks its schedule. This, however, suffers from limitations, as one of the assumptions is that only 2 neighbours (neighbours of 2 successive levels) interfere. Besides, a centralized solution is not appropriate for multihop WSN,

### SUMMARY OF THE INVENTION

Briefly described, the present invention is a method for constructing a cluster-tree topology in an IEEE 802.15.4 standard ruled PAN network including a PAN coordinator considered the root of the tree, the nodes all working in the synchronous beacon-enabled mode. In the invention, nodes become associated in clusters, each cluster including a parent node and child nodes operating in a channel different from the channels of the neighbour clusters, this channel being chosen by the parent node for communicating with its children.

Cluster trees built according to this construction method are therefore multichannel trees, where nodes operate in parallel and superframes can overlap in time, as they work on separate channels.

Each parent coordinator chooses one channel to communicate with its children, and coordinators close enough to each other that they may interfere choose orthogonal channels to avoid beacon collisions. Obviously, non-interfering clusters can choose the same channels.

In order for unassociated nodes to find a parent node and communicate with that node in a cluster, there is, according to the invention, a unique control channel on which coordinators send a predetermined information packet, referred to as a hello-packet, dedicated to build groups with unassociated neighbour nodes located within radio range, thus making clusters of associated nodes. Newly associated nodes in turn become coordinator nodes.

In fact, depending on their location in the cluster tree, coordinators can be of two types:
- if they are non-leaf nodes, i.e. relaying traffic, they must be active coordinators sending beacons on their communication channel. In this case, they are active during their superframe, ready to receive messages from their children;
- if they are leaf nodes, they only need to be passive coordinators, active at the beginning of their superframes, waiting for association requests from potential children. They become active coordinators as soon as an unassociated node becomes associated with them.

Active and passive coordinators send hello-packets periodically, one during each Beacon interval (Bl) period, these hello-packets being scheduled randomly during their inactive period of the superframes.

Using this method, unassociated nodes can efficiently find potential parents. In particular, such nodes can obtain the data relating to the channel and superframe beginning of a passive coordinator to become associated with it.

Using a dedicated control channel has the following advantages, inter alia:
- There are 16 channels in IEE 802,15.4. Dedicating an exclusive channel to control traffic in fact only takes about 6% of the radio bandwidth.
- Scanning 16 channels during one BI is time-consuming: for instance, a node must be awake to listen to possible incoming data packets for 96 min on average, if the value of BO is 14. Using a control channel reduces both convergence duration and energy consumption.
- There is no bottleneck problem as is the case in similarly structured networks when the control channel is used to reserve data channels with RTS/CTS (Request To Send/Clear To Send) data as previously proposed. Only hello-packets are transmitted on the control channel, one per BI per coordinator.
- If neighbour discovery had been done *in-band,* collisions would possibly occur between hello-packets and other data transmissions in neighbouring superframes' inactive periods because they are not synchronized across the network. Communications may thus take place in the neighbourhood at the same time hello-packets are sent.
- Random delays in a probabilistic neighbour discovery scheme would increase the total reconstruction time of the cluster tree, isolating parts of the network for long periods of time.

Hello-packets may collide on this control channel, but very rarely, as each hello-packet transmission lasts a few milliseconds, whereas BI typically lasts at least several seconds. Since nodes in fact choose random offsets for their hello-packets transmissions, successive collisions will happen very rarely.

Preferably, in the inventive method, hello-packets include at least the following information :
- coordinator identifier;
- number of child nodes;
- superframe slot;
- cluster channel;
- sequence number; and
- depth in the tree, which means hop count to the root, being 0 for the PAN coordinator.

Hello-packets sent by active coordinators include a map of channels and superframe slots used by their neighbours.

In fact, the PAN coordinator starts transmitting hello-packets on a periodical basis on the dedicated control channel, thereby announcing the depth 0. All other nodes start the association procedure from the unassociated state in the following manner: unassociated nodes listen to the control channel and construct a neighbourhood table based on the received hello-packets, and choose the coordinator node with the smallest number of child nodes not equal to zero,

As a result, no new active coordinators are created if not necessary, which leads to maximizing the number of leaves of the tree using the existing communication channels.

Alternatively, each node can choose the coordinator closest to the PAN coordinator, in the event the requesting node is in communication range with parent nodes having the same number of child nodes.

If by any chance one node trying to become associated with a tree is in communication range with several nodes simultaneously having the same number of children and the same depth with respect to the PAN coordinator, it randomly chooses the coordinator with which it shall be associated.

The choice may possibly be made at the end of their Beacon Interval (BI).

In fact, during an association process, each node performs the traditional IEEE 802.15.4 association procedure through the communication channel (cluster channel) of the new parent during the active part of its superframe and becomes associated.

Moreover, based on the information received in the hello-packets, the nodes choose their own cluster channel for future potential communications with child nodes.

Preferably, coordinators use a greedy randomized adaptive search procedure to select their cluster channels, first sorting channels in descending order of the number of interferers during the superframe slot of the node, then randomly selecting one of the less used channels.

Achievement of the complete association process aims to construct a balanced cluster tree topology in an IEEE 802.15.4 environment and leads to the following general result: each node has a unique parent node and is a member of a tree rooted at the PAN coordinator.

Nodes can also detect that the tree is broken, i.e. they have the capacity to monitor the connectivity toward the PAN coordinator.

In fact, the PAN coordinator increments the sequence number of the IEEE 802.15.4 frames in every beacon, and every coordinator in the tree includes the sequence number of the last received beacon in its own beacons and hello-packets.

The sequence number is consequently a proper indicator of the state of the tree.

Thus, each node changes its state from the associated state to the unassociated state when the sequence number remains unchanged during at least 3 beacons intervals (BI), and stops transmitting beacons if it is an active coordinator.

Child nodes then break the association when they detect that their parent node is in an unassociated state.

Since the detection may take several BI at each level of the sub-tree, a disconnected coordinator may try to associate to another parent quickly if possible, which prevents the destruction of the entire sub-tree and results in a fast recovery.

In fact, to make connections as quickly as possible, nodes preferably choose to end their superframes when superframes of their parent nodes start.

The method according to the invention tries to maximize the number of leaves, as unassociated nodes must preferably choose a parent node that already has child nodes. However, as nodes choose the parent with the smallest number of existing children, this leads to the construction of a fairly balanced tree.

It is necessary to limit the number of child nodes associated with a coordinator, because excessive contention between nodes in a cluster may lead to collisions and packets losses.

For these reasons, the number of child nodes associated with a parent node is limited to a predetermined threshold maximal number, above which a node either chooses to become associated with a coordinator without child nodes if it can find one in the neighbourhood, or with an active coordinator with a number of children greater than the above-mentioned maximal threshold number if there are no other possibilities,

In fact, according to the invention, the maximal threshold number is preferably set to 5, which means that no more than 5 active child nodes will theareticaily be allowed for a coordinator.

### BRIEF DESCRIPTION OF THE DRAWINGS

Fig. 1 is a schematic view of a Multichannel cluster tree according the present invention;
Fig. 2 is a schematic diagram for the process of discovering parent nodes during both the association process and superframe scheduling.

### DESCRIPTION OF THE PREFERRED EMBODIMENT

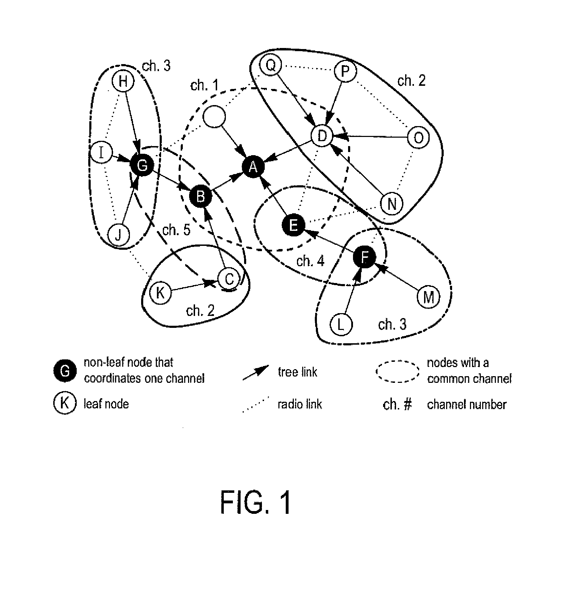

In the example of cluster-tree topology presented in Fig. 1, node A is the PAN coordinator. Non-leaf nodes (B, C, D, E, F and G) choose a channel for communication with their children. There are 6 clusters, defined as sets of nodes composed of a coordinator and its children that use the same cluster channel for communication, for instance nodes D, N, O, P, Q defining a cluster operating with channel 2. Non-interfering clusters may choose the same channel, as is for instance the case for clusters of G and F or for clusters of C and D.

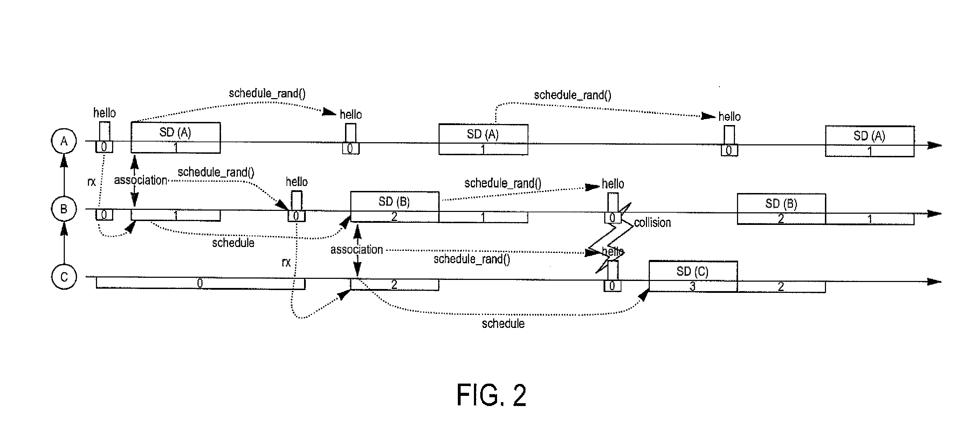

Depending on their locations, unassociated nodes can become associated using the neighbour discovery process put forward through the present invention, and illustrated in figure 2.

First, node A, the PAN coordinator, sends hello packets through channel 0, which has been chosen as the control channel. As soon as node B receives one of said hello-packets, it joins the network, and starts acting as a coordinator. B in turn schedules its hello-packet transmissions at a random instant in each inactive period of its superframe. Node C continues listening to channel 0 until it receives the hello-packets from B, since it is out of reach of A, and so on.

The parts of the superframes and hello-packets which are represented below the time lines are the incoming superframes or hello-packets, whereas hello-packets or superframes having a part located above the line are the outgoing superframes or hello-packets,

B, for instance, receives a hello-packet and an ingoing superframe on channel 1 coming from the PAN coordinator A, then schedules the broadcast of a hello-packet on channel 0 and of a superframe SD (B) on channel 2, the latter just before the incoming superframe from A etc...

In fact, nodes A, B and C choose their respective superframe slots so that the upward data traffic does not suffer from excessive delays. Generally speaking, a node chooses a superframe slot so that no overlap with the parent superframe is possible. The precedence rule of IEEE 802.15.4 is kept, as the superframes of both said node and its parent are interspaced by the StartTime duration defined above, In the pattern represented in Fig. 2, in order to minimize end-to-end delays for upward data traffic, nodes choose to end their superframes when the superframes of their parents start (StartTime = BI- SD).

However, we may instead choose to increase the network capacity. We will thus maximize StartTime (= BI / 2): a coordinator may be able to adjust its Superframe Duration independently up to the beginning of the superframe of its parent (i.e. half of the radio bandwidth). This solution provides a localized trade-off between throughput and energy consumption.

This has many advantages in terms of organization of data traffic as well as energy consumption,
- Limited collisions: interfering nodes with overlapping superframes (e.g. siblings) will use orthogonal channels.
- Low channel assignment complexity: interference may only happen among nodes with the same depth in the cluster tree. The large number of available channels makes a greedy approach efficient.
- Energy efficiency: it maximizes the number of leaves, and minimizes the number of active coordinators. This strategy is efficient for saving energy and spectrum capacity.

As already mentioned, the choice of the channel depends on the information included in the received hello-packets, for instance using a greedy randomized search procedure on the basis of the map of channels contained in the received hello-packets.

When associated, the nodes, now child nodes, become passive coordinators, in turn expecting association requests from unassociated nodes. If such requests occur, and provided that one unassociated node choose a passive coordinator using the above-mentioned algorithm (choice of the coordinator with the smallest number of child nodes, or even with no child nodes if the available parent nodes have more than 5 child nodes already), it becomes an active coordinator, i.e. a parent node.

A wireless sensor Network constructed according to the inventive method shows significant improvements of both the data packet delivery ratio and delay.

## Claims

1. A method for constructing a cluster-tree topology in an IEEE 802.15.4 standard ruled PAN (Personal Area Network) network including a PAN coordinator considered the root of the tree, and nodes all working in the synchronous beacon-enabled mode, **characterized in that** nodes become associated in clusters, each cluster including a parent node and child nodes operating in a channel different from the channels of the neighbour clusters, this channel being chosen by the parent node for communicating with its children.

2. The method for constructing a cluster-tree topology in an IEEE 802.15.4 standard ruled PAN (Personal Area Network) network according to the preceding claim, **characterized in that** there is a unique control channel on which coordinators send a predetermined information packet referred to as a hello-packet dedicated to building groups with unassociated neighbour nodes located within radio range, thus making clusters of associated nodes.

3. The method for constructing a cluster-tree topology in an IEEE 802.15.4 standard ruled PAN (Personal Area Network) network according to the preceding claim, **characterized in that** newly associated neighbour nodes in turn become coordinator nodes.

4. The method for constructing a cluster-tree topology in an IEEE 802.15.4 standard ruled PAN (Personal Area Network) network according to the preceding claim, **characterized in that** nodes become passive coordinators after they become associated with a coordinator, and active coordinators when other nodes become associated with them.

5. The method for constructing a cluster-tree topology in an IEEE 802.15.4 standard ruled PAN (Personal Area Network) network according to the preceding claim, **characterized in that** active coordinators send one hello-packet during each Beacon Interval (BI) period, scheduled randomly during the inactive period of the superframe,

6. The method for constructing a cluster-tree topology in an IEEE 802.15.4 standard ruled PAN (Personal Area Network) network according to the preceding claim, **characterized in that** hello-packets include the following information:
- coordinator identifier;
- number of child nodes;
- superframe slot;
- cluster channel;
- sequence number; and
- depth in the tree, which means hop count to the root, being 0 for the PAN coordinator.

7. The method for constructing a cluster-tree topology in an IEEE 802.15.4 standard ruled PAN (Personal Area Network) network according to the preceding claims, **characterized in that** hello-packets sent by active and passive coordinators include a map of channels and superframe slots used by their neighbours.

8. The method for constructing a cluster-tree topology in an IEEE 802.15.4 standard ruled PAN (Personal Area Network) network according to one of claims 2 to 7, **characterized in that** unassociated nodes listen to the control channel and construct a neighbourhood table based on the received hello-packets, and choose the coordinator node with the smallest non-zero number of child nodes.

9. The method for constructing a cluster-tree topology in an IEEE 802.15.4 standard ruled PAN (Personal Area Network) network according to one of claims 2 to 7, **characterized in that** each node chooses the coordinator closest to the PAN coordinator in the event it is in communication range with several nodes having the same number of child nodes.

10. The method for constructing a cluster-tree topology in an IEEE 802.15.4 standard ruled PAN (Personal Area Network) network according to claims 2 to 7, **characterized in that** each node randomly chooses the coordinator in the event it is in communication range with several nodes having the same number of child nodes and having the same depth with respect to the PAN coordinator.

11. The method for constructing a cluster-tree topology in an IEEE 802.15.4 standard ruled PAN (Personal Area Network) network according to claims 8 to 10, **characterized in that** unassociated nodes choose a coordinator node after listening to the control channel for a complete beacon interval (BI).

12. The method for constructing a cluster-tree topology in an IEEE 802.15.4 standard ruled PAN (Personal Area Network) network according to any of claims 7 to 11, **characterized in that** each node chooses its own cluster channel, based on the information included in the received hello-packets, for future potential communications with child nodes.

13. The method for constructing a cluster-tree topology in an IEEE 802.15.4 standard ruled PAN (Personal Area Network) network according to the preceding claim, **characterized in that** coordinators use a greedy randomized adaptive search procedure to select their cluster channels, first sorting channels in descending order of the number of interferers during the superframe slot of the node, then randomly selecting one of the less used channels.

14. The method for constructing a cluster-tree topology in an IEEE 802.15.4 standard ruled PAN (Personal Area Network) network according to any of claims 2 to 13, **characterized in that** the PAN coordinator increments the sequence number of the IEEE 802.15.4 frames in every beacon, and every coordinator in the tree includes the sequence number of the last received beacon in its own beacons and hello-packets.

15. The method for constructing a cluster-tree topology in an IEEE 802,i5,4 standard ruled PAN (Personal Area Network) network according to the preceding claim, **characterized in that** each node changes its state from the associated state to the unassociated state when the sequence number remains unchanged for at least 3 beacons intervals (BI), and stops transmitting beacons if it is an active coordinator.

16. The method for constructing a cluster-tree topology in an IEEE 802,15.4 standard ruled PAN (Personal Area Network) network according to the preceding claim, **characterized in that** child nodes break the unassociation when they detect that their parent node is in an unassociated state,

17. The method for constructing a cluster-tree topology in an IEEE 802.15.4 standard ruled PAN (Personal Area Network) network according to any of the preceding claims, **characterized in that** nodes choose to end their superframes when superframes of their parent nodes start.

18. The method for constructing a cluster-tree topology in an IEEE 802.15.4 standard ruled PAN (Personal Area Network) network according to any of the preceding claims, **characterized in that** the number of child nodes associated with a parent node is limited to a predetermined maximal threshold number, above which a node either choose to become associated with a coordinator without child nodes if it can find one in the neighbourhood, or with an active coordinator with a number of children greater than the above-mentioned maximal threshold number if there are no other possibilities.

19. The method for constructing a cluster-tree topology in an IEEE 802.15.4 standard ruled PAN (Personal Area Network) network according to the preceding claim, **characterized in that** the maximal threshold number is equal to 5 active child nodes.
